# EUROPEAN PATENT SPECIFICATION

(11) **EP 2 781 848 B1**
(45) Date of publication and mention of the grant of the patent: **04.12.2019**
(21) Application number: 11873455.7
(22) Date of filing: 29.09.2011
(51) Int. Cl.: F24H 1/00, F25B 29/00, F25B 13/00, F24F 11/00, F24D 19/10, F24F 3/06, F24F 5/00, F24F 11/70, F24F 140/50

(54) **COMBINED AIR-CONDITIONING/HOT WATER SUPPLY SYSTEM**
KOMBINIERTES KLIMAANLAGEN-/HEISSWASSERVERSORGUNGSSYSTEM
SYSTÈME DE CLIMATISATION/ALIMENTATION EN EAU CHAUDE COMBINÉ

(43) Date of publication of application: 24.09.2014
(73) Proprietor: Mitsubishi Electric Corporation, Tokyo 100-8310 (JP)
(72) Inventor: KAWAGOE, Tomokazu, Tokyo 100-8310 (JP); KOGE, Hirofumi, Tokyo 100-8310 (JP)
(74) Representative: Pfenning, Meinig & Partner mbB
(86) International application number: PCT/JP2011/005499
(87) International publication number: WO 2013/046269

(56) References cited:
- EP-A1- 2 233 864
- WO-A1-2009/098751
- WO-A1-2009/098751
- WO-A1-2011/061792
- WO-A1-2011/089652
- JP-A- H01 281 379
- JP-A- H02 290 476
- JP-A- H07 324 795
- JP-A- H11 118 228
- JP-A- S62 162 834
- JP-A- S63 189 739
- JP-A- 2000 193 288
- JP-A- 2004 036 966
- JP-A- 2006 125 722
- JP-B2- H0 633 914
- JP-B2- S6 020 660
- US-A1- 2010 282 435

## Description

### Technical Field

The present invention relates to an air-conditioning hot-water supply combined system that includes a heat pump cycle and that is capable of simultaneously providing an air conditioning load and a hot-water supply load.

### Background Art

There have been proposed air-conditioning hot-water supply combined systems that include a heat pump cycle and that are capable of simultaneously providing an air conditioning load and a hot-water supply load. One example of such systems is an air-conditioning hot-water supply combined system capable of simultaneously providing a cooling load, a heating load, and a hot-water supply load by cascading a hot-water supply refrigerant system including a compressor, a water heat exchanger, an expansion device, and a refrigerant-to-refrigerant heat exchanger to part of a condenser in an air-conditioning refrigerant system including a compressor, an outdoor heat exchanger, an expansion device, and an indoor heat exchanger, and an accumulator (see, for example, Patent Literature 1). Another exemplary air-conditioning hot-water supply combined system according to the preamble of claim 1 is disclosed in Patent Literature 2.

### Citation List

### Patent Literature

Patent Literature 1: International Publication No. WO 2009/098751 (e.g., page 1, Fig. 1)
Patent Literature 2: International Publication No. WO 2011/061792

### Summary of Invention

### Technical Problem

An air-conditioning hot-water supply combined system described in Patent Literature 1 can simultaneously provide an air conditioning load and a hot-water supply load by multiple connections of a hot-water supply unit and an indoor unit to a heat source unit using a single refrigerant system. In the case of such an air-conditioning hot-water supply combined system following the idea of a building multi-air-conditioning, the capacity of the indoor unit and the capacity of the hot-water supply unit are selected with reference to the maximum loads occurring in the indoor load and the hot-water supply load, and then the heat source unit that fulfills the total capacity of the capacity of the indoor unit and that of the hot-water supply unit is selected.

However, in the air-conditioning hot-water supply combined system, depending on the installation environment or the used air-conditioning and hot-water supply equipment, in consideration of loads in areas where usage is different depending on seasons (e.g., floor heating using hot water supply and heating using a fan coil are performed in winter and air-conditioning using an air conditioner is performed in summer) or loads in periods where both the air conditioning load and the hot-water supply load are small (e.g., intermediate terms between the summer and winter), the capacity of the heat source unit may be significantly larger than the load required to the heat source unit and the capital investment may be increased.

In addition, problems arise in that the dimensions of the heat source unit are expanded by an increase in the capacity of the heat source unit and in that the installation space is increased by the use of a plurality of refrigerant systems to fulfill the loads.

Moreover, if a user intends to carry out in the user side simple energy-saving control of air conditioning in a simple way by starting or stopping the indoor unit and the hot-water supply unit and changing the set temperature, it is necessary to purchase an optional expensive high-end controller through which operation control by starting and stopping the indoor unit and the hot-water supply unit using a timer scheduler can be carried out, for example.

The present invention is made to overcome the above-described problems, and it is an object of the invention to provide a low-cost space-saving air-conditioning hot-water supply system that can be achieved by enabling indoor units and hot-water supply units more than the allowable capacity of a heat source unit to be connected under the limitations of the usage environment of air-conditioning loads and hot-water supply loads and by addition of a simple energy-saving control function. Solution to Problem

An air-conditioning hot-water supply combined system according to the present invention as defined in claim 1 includes at least one heat source unit including a compressor and a heat exchanger, at least one indoor unit including an indoor-side heat exchanger and an indoor-side expansion device, at least one hot-water supply unit including a refrigerant-to-water heat exchanger and a hot-water supply side expansion device, and a branching unit that connects the indoor unit and the hot-water supply unit in parallel with each other to the heat source unit. The at least one hot-water supply unit comprises a plurality of hot-water supply unit. The system includes also a control means configured such that in a state where the at least one indoor unit and at least one of the hot-water supply units are running, when at least another one of the hot-water supply units submits an operation permission request and it is determined that, if the hot-water supply unit having submitted the operation permission request additionally runs, a capacity of the heat source unit is exceeded, suspension of the running indoor unit fulfilling a predetermined condition is performed repeatedly until an allowable operation capacity of the heat source unit becomes satisfied, and a performance of the heat source unit is allocated to the hot-water supply unit having submitted the request.

### Advantageous Effects of Invention

The air-conditioning hot-water supply combined system according to the present invention can reduce its cost and save space by enabling indoor units and hot-water supply units more than the allowable capacity of a heat source unit to be connected under the limitations of the usage environment of air-conditioning loads and hot-water supply loads and by addition of a simple energy-saving control function.

### Brief Description of Drawings

[Fig. 1] Fig. 1 is a circuit diagram that schematically illustrates a refrigerant circuit configuration of an air-conditioning hot-water supply combined system according to an embodiment of the present invention.
[Fig. 2] Fig. 2 is a control block diagram that illustrates an electrical configuration of the air-conditioning hot-water supply combined system according to the embodiment of the present invention.
[Fig. 3] Fig. 3 is a flowchart that illustrates an operation capacity limiting process when an operation of an indoor unit is requested to be added.
[Fig. 4] Fig. 4 is a flowchart that illustrates the operation capacity limiting process when an operation of a hot-water supply unit is requested to be added.
[Fig. 5] Fig. 5 is a flowchart that illustrates the operation capacity limiting process when a unit suspends its operation.

### Description of Embodiments

An embodiment of the present invention is described below with reference to the drawings.

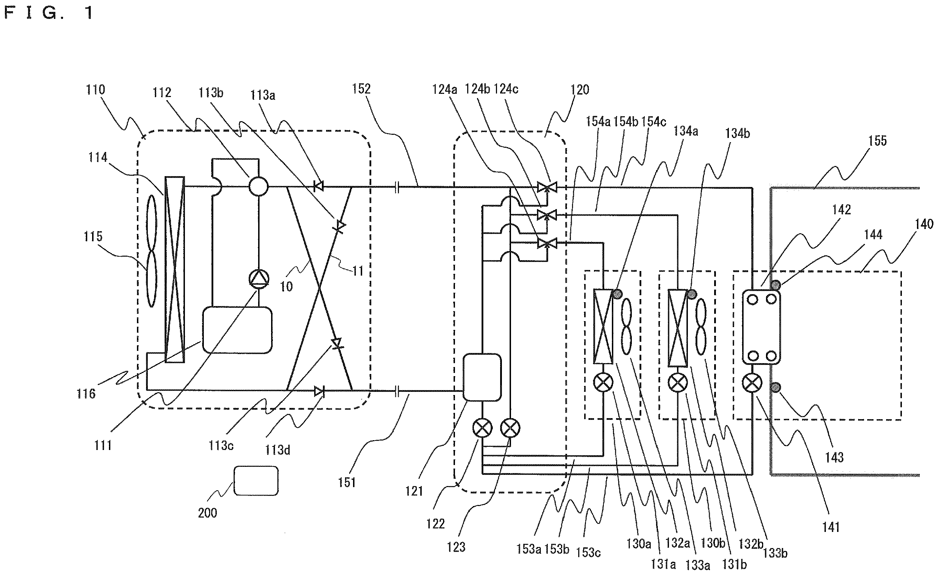

Fig. 1 is a circuit diagram that schematically illustrates a refrigerant circuit configuration of an air-conditioning hot-water supply combined system 100 according to the embodiment of the present invention. The configuration of the air-conditioning hot-water supply combined system 100 is described with reference to Fig. 1. The relationships among the sizes of the components in the drawings, including Fig. 1, may be different from the real ones.

The air-conditioning hot-water supply combined system 100 is typically placed in a building, an apartment house, a hotel, or other similar structure and can simultaneously provide a cooling load, a heating load, and a hot-water supply load by using a refrigeration cycle (heat pump) circulating a refrigerant. The air-conditioning hot-water supply combined system 100 is configured such that a heat source unit 110, a branching unit 120, at least one indoor unit 130, and at least one hot-water supply unit 140 are connected. The indoor unit 130 and the hot-water supply unit 140 are connected in parallel with each other to the heat source unit 110.

The heat source unit 110 and the branching unit 120 are connected to each other with two refrigerant pipes (high-pressure main pipe 151 and low-pressure main pipe 152). The branching unit 120 and the indoor unit 130 are connected to each other with two refrigerant pipes (liquid refrigerant pipe 153 and gas refrigerant pipe 154). The branching unit 120 and the hot-water supply unit 140 are also connected to each other with the two refrigerant pipes (liquid refrigerant pipe 153 and gas refrigerant pipe 154). The heat source unit 110 communicates with the indoor unit 130 and the hot-water supply unit 140 via the branching unit 120. The hot-water supply unit 140 is connected to a water circuit 155 and can receive supplied water. The water circuit 155 is connected to a water pipe.

Fig. 1 illustrates a case where two indoor units 130 are connected, as an example. To distinguish between the indoor units 130, they have subscripts "a" and "b." The components corresponding to the indoor unit 130a also have the subscript "a." The components corresponding to the indoor unit 130b also have the subscript "b." To distinguish the components corresponding to the hot-water supply unit 140 from those corresponding to the indoor units 130, they have a subscript "c." Unless specifically specified, all of "a," "b," and "c" are referred to.

The liquid refrigerant pipe 153 branches into pipes (three pipes in this case) whose number corresponds to the number of the indoor units 130 connected to the branching unit 120 and the number of the hot-water supply units 140 connected to the branching unit 120. The pipes into which the liquid refrigerant pipe 153 branches are referred to as a liquid branch pipe 153a, a liquid branch pipe 153b, and a liquid branch pipe 153c. Similarly, the gas refrigerant pipe 154 branches into pipes (three pipes in this case) whose number corresponds to the number of the indoor units 130 connected to the branching unit 120 and the number of the hot-water supply units 140 connected to the branching unit 120. The pipes into which the gas refrigerant pipe 154 branches are referred to as a gas branch pipe 154a, a gas branch pipe 154b, and a gas branch pipe 154c. The liquid branch pipe 153a and the gas branch pipe 154a are connected to the indoor unit 130a. The liquid branch pipe 153b and the gas branch pipe 154b are connected to the indoor unit 130b. The liquid branch pipe 153c and the gas branch pipe 154c are connected to the hot-water supply unit 140.

### [Heat Source Unit 110]

The heat source unit 110 has the function of supplying a heating energy or a cooling energy to the indoor unit 130 and the hot-water supply unit 140 via the branching unit 120. The heat source unit 110 mainly includes a compressor 111, a switching valve 112, a heat exchanger 114, and an accumulator (liquid collecting container) 116, and these components are connected in series in sequence in the circuitry illustrated in Fig. 1. Depending on the use of the heat source unit 110, the components of the refrigerant circuit used inside the unit are selected and the refrigerant circuit may preferably be configured.

The compressor 111 may be of a type that can suck a refrigerant and compress it to a high-temperature and high-pressure state and is not limited to specific types. The compressor 111 can be of various types. For example, the compressor 111 may be of a reciprocating type, rotary type, a scroll type, or a screw type. One preferable type of the compressor 111 may comprise the one whose rotation speed can be variably controlled by the use of an inverter.

The switching valve 112 may comprise a four-way valve, for example, and is configured to switch a refrigerant stream in accordance with a required operation mode. The heat exchanger 114 has the main function of rejecting or receiving heat from the heat source (e.g., air, water, brine, or the like). The type of the heat exchanger 114 may preferably be selected in accordance with the used heat source. If the heat source is air, the heat exchanger 114 may comprise an air heat exchanger. If the heat source is water or brine, the heat exchanger 114 may be a water heat exchanger. As illustrated in Fig. 1 by way of example, when the heat exchanger 114 is an air heat exchanger, an air-sending device 115 may be placed in the vicinity of the heat exchanger 114. The accumulator 116 can be any device that can store an excessive refrigerant.

The heat source unit 110 is provided with four check valves 113 (check valves 113a to 113d). The check valve 113a is disposed on the low-pressure main pipe 152 between the switching valve 112 and the branching unit 120 and permits a refrigerant to flow in only the direction from the branching unit 120 to the heat source unit 110. The check valve 113d is disposed on the high-pressure main pipe 151 between the heat exchanger 114 and the branching unit 120 and permits a refrigerant to flow in only the direction from the heat source unit 110 to the branching unit 120.

The high-pressure main pipe 151 and the low-pressure main pipe 152 are connected to each other with a first connection pipe 10 connecting the upstream side of the check valve 113d and the upstream side of the check valve 113a and a second connection pipe 11 connecting the downstream side of the check valve 113d and the downstream side of the check valve 113a. The first connection pipe 10 is provided with the check valve 113b. The check valve 113b permits the refrigerant to flow in only the direction from the low-pressure main pipe 152 to the high-pressure main pipe 151. The second connection pipe 11 is provided with the check valve 113c. The check valve 113c permits the refrigerant to flow in only the direction from the low-pressure main pipe 152 to the high-pressure main pipe 151.

The provision of the first connection pipe 10, the second connection pipe 11, the check valve 113a, the check valve 113b, the check valve 113c, and the check valve 113d enables the refrigerant flowing into the branching unit 120 to be directed to only a certain direction, independently of operations required by the indoor unit 130. These components are optional.

### [Branch Unit 120]

The branching unit 120 has the function of supplying heating energy or cooling energy supplied from the heat source unit 110, to the indoor unit 130 and the hot-water supply unit 140. The branching unit 120 mainly includes a gas-liquid separator 121, flow switching valves 124, an expansion device 122, and an expansion device 123. The number of the flow switching valves 124 (three in this example) corresponds to the number of the indoor units 130 connected to the branching unit 120 and the number of the hot-water supply units 140 connected to the branching unit 120.

The flow switching valves 124 are configured to switch a refrigerant flow to be supplied to the indoor units 130 and the hot-water supply unit 140. Switching the refrigerant stream using the flow switching valves 124 enables the load-side units (indoor units 130 and the hot-water supply unit 140) connected to the branching unit 120 to simultaneously perform air-cooling (cooling) and heating (supplying of hot water). Each of the flow switching valves 124 can comprise a three-way valve, for example. The flow switching valve 124 has a first element connected to the low-pressure main pipe 152, a second element connected to the gas-liquid separator 121, and a third element connected to an indoor-side heat exchanger 132 in the indoor unit 130 or a refrigerant-to-water heat exchanger 142 in the hot-water supply unit 140.

The gas-liquid separator 121 is connected to the high-pressure main pipe 151 and also connected to the inlet side and outlet sides of the indoor units 130. The gas-liquid separator 121 has the function of separating an incoming refrigerant into a gas refrigerant and a liquid refrigerant. The gas-liquid separator 121 is provided when the refrigerant pipes between the heat source unit 110 and the branching unit 120 are of the dual-pipe type. Fig. 1 illustrates, as an example, the air-conditioning hot-water supply combined system 100 in which the plurality of indoor units 130 and the single hot-water supply unit 140 are connected to the single branching unit 120. If the refrigerant pipes between the heat source unit 110 and the branching unit 120 are of the triple-pipe type, a configuration in which a single branching unit 120 is connected to each load-side unit may be used.

The expansion device 122 is disposed between the gas-liquid separator 121 and each of an indoor-side expansion device 131 and a hot-water supply side expansion device 141 and is configured to decompress and expand a refrigerant. The expansion device 123 is disposed on the connection pipe connecting the low-pressure main pipe 152 and the pipe between the expansion device 122 and each of the indoor-side expansion device 131 and the hot-water supply side expansion device 141. The expansion device 123 is configured to decompress and expand a refrigerant. Each of the expansion device 122 and the expansion device 123 may preferably comprise one having a variably controllable opening degree, for example, precise flow regulation means using an electronic expansion valve or inexpensive refrigerant flow control means, such as a capillary tube.

### [Indoor Unit 130]

Each indoor unit 130 has the function of receiving supplied heating energy or cooling energy from the heat source unit 110 and serving a heating load or a refrigerant load. The indoor unit 130 mainly includes the indoor-side expansion device 131 and the indoor-side heat exchanger (load-side heat exchanger) 132, and both are connected in series. Fig. 1 illustrates, as an example, a state where the two indoor units, the indoor unit 130a and the indoor unit 130b, are connected in parallel. The number of the indoor units 130 is not limited to a specific number. Three or more indoor units 130 may be connected in a similar way. The indoor unit 130 may preferably include an indoor-side air-sending device 133 for supplying air to the indoor-side heat exchanger 132. The indoor-side air-sending device 133 can be a fan, for example, and be in the vicinity of the indoor-side heat exchanger 132.

The indoor-side expansion device 131 has the function as a pressure reducing valve and an expansion valve and is configured to decompress and expand a refrigerant. The indoor-side expansion device 131 may preferably comprise one having a variably controllable opening degree, for example, precise flow regulation means using an electronic expansion valve or inexpensive refrigerant flow control means, such as a capillary tube. The indoor-side heat exchanger 132 functions as a radiator (condenser) at the time of heating cycles and as an evaporator at the time of cooling cycles. The indoor-side heat exchanger 132 is configured to cause air supplied from the indoor-side air-sending device 133 and a refrigerant to exchange heat with each other and to condense and liquefy the refrigerant or evaporate and gasify it.

The indoor unit 130 further includes a temperature sensing element 134. The temperature sensing element 134 is configured to sense a load at the installation site and may comprise a thermistor, for example. The installation site and the type of the temperature sensing element 134 are not limited to specific ones and may be selected depending on the characteristics of the indoor unit 130 and a load to be sensed.

### [Hot-Water Supply Unit 140]

The hot-water supply unit 140 has the function of supplying heating energy or cooling energy from the heat source unit 110 to a water circuit through the refrigerant-to-water heat exchanger 142. The hot-water supply unit 140 mainly includes the hot-water supply side expansion device 141 and the refrigerant-to-water heat exchanger 142, and both are connected in series. Fig. 1 illustrates, as an example, a state where the single hot-water supply unit 140 is connected. The number of the hot-water supply units 140 is not limited to a specific number. The hot-water supply side expansion device 141 has the same function as that of the indoor-side expansion device 131. If it is necessary to provide high-temperature water, a cascade cycle configuration may be used that includes an independent refrigerant circuit (refrigerant circuit in which at least a refrigerant-to-refrigerant heat exchanger, a compressor, the refrigerant-to-water heat exchanger 142, and an expansion valve are connected by pipes) connected between the heat source unit 110 and the hot-water supply unit 140.

In that case, high-temperature water for use in providing high-temperature water may be generated by the use of heat through the refrigerant-to-water heat exchanger 142, the heat being exchanged with the air-conditioning hot-water supply combined system 100 through the refrigerant-to-refrigerant heat exchanger. In this way, if a cascade cycle is used in hot-water supply, exchanging heat with the air-conditioning hot-water supply combined system 100 through the above-described refrigerant-to-refrigerant heat exchanger and transferring the heat to the high-temperature side enables providing high-temperature water that would be unable to be provided if refrigerant temperature in the air-conditioning hot-water supply combined system 100 is used.

The refrigerant-to-water heat exchanger 142 is configured to cause water flowing through the water circuit 155 and the refrigerant flowing through the refrigerant pipe to exchange heat with each other. The water heated or cooled in the refrigerant-to-water heat exchanger 142 is used in supplying hot water or cold water. The water circuit 155 includes a pump (not illustrated) for circulating water through the water circuit 155 and a water storage tank for storing water heated or cooled in the refrigerant-to-water heat exchanger 142. That is, the water circuit 155 is established by circulation of water heated or cooled in the refrigerant-to-water heat exchanger 142.

The hot-water supply unit 140 further includes a temperature sensing element 143 and a temperature sensing element 144. Each of the temperature sensing element 143 and the temperature sensing element 144 is configured to sense a load at the installation site and may comprise a thermistor, for example. The installation site and the type of each of the temperature sensing element 143 and the temperature sensing element 144 are not limited to specific ones and may be selected depending on the characteristics of the indoor unit 130 and a load to be sensed. The water pipe connected to the water circuit 155 may preferably comprise a copper pipe, a stainless-steel pipe, a steel pipe, a vinyl chloride pipe, or other types of pipes. Here, water is described as an example of a heat medium circulated through the water circuit 155. However, the heat medium is not limited to water. For example, an anti-freezing liquid (brine) may be circulated.

As described above, the air-conditioning hot-water supply combined system 100 has a system configuration in which the heat source unit 110 is connected to the indoor units 130 and the hot-water supply unit 140 through the branching unit 120.

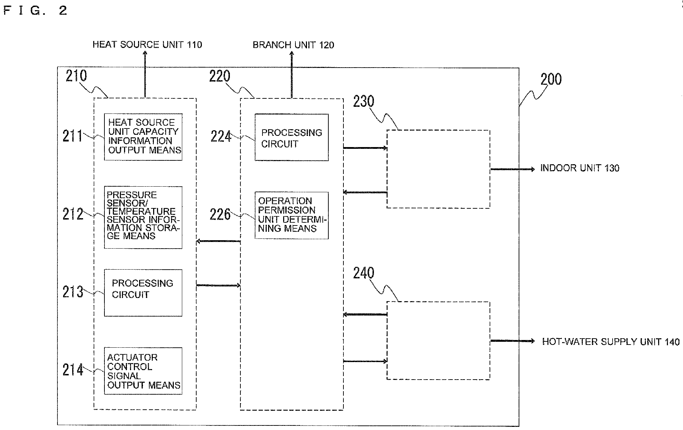

The air-conditioning hot-water supply combined system 100 includes control means 200 for exercising centralized control over the air-conditioning hot-water supply combined system 100. The control means 200 controls the driving frequency of the compressor 111, the rotation speed of the air-sending device (air-sending device 115, indoor-side air-sending device 133), the switching of the switching valve 112, the opening degree of each expansion means, and the switching of the flow switching valve 124, for example. That is, the control means 200 is configured to control each of the actuators (driving components, such as the compressor 111, switching valve 112, air-sending device 115, indoor-side expansion device 131, and hot-water supply side expansion device 141) on the basis of information on detection by various sensing elements (not illustrated) and instructions from a remote controller. The control means 200 is described in details with reference to Fig. 2.

### [Other Target System Configuration]

Fig. 1 illustrates an example in which the air-conditioning hot-water supply combined system 100 is of the dual-pipe cooling and heating simultaneous type using two refrigerant pipes connecting the heat source unit 110 to the indoor units 130 and the hot-water supply unit 140 through the branching unit 120. The air-conditioning hot-water supply combined system 100 is not limited to this example. The air-conditioning hot-water supply combined system 100 may be of the triple-pipe cooling and heating simultaneous type or cooling and heating switching type using three refrigerant pipes.

Fig. 2 is a control block diagram that illustrates an electrical configuration of the air-conditioning hot-water supply combined system 100. The control means 200 included in the air-conditioning hot-water supply combined system 100 is described in detail with reference to Fig. 2.

As described above, the air-conditioning hot-water supply combined system 100 includes the control means 200. The control means 200 typically comprises a microcomputer or a DSP and has the function of exercising control over the air-conditioning hot-water supply combined system 100. The control means 200 includes heat source unit control means 210, branching unit control unit 220, indoor unit control means 230, and hot-water supply unit control means 240.

The allocation of these control means is described below. Autonomous decentralized cooperation control may be used in which each of the units includes corresponding control means and each of the units independently exercises control, or another control may be used in which any one of the units includes all control means and the unit including it provides the other units with control instructions using communications or the like. For example, when the heat source unit 110 includes the heat source unit control means 210, the branching unit 120 includes the branching unit control means 220, the indoor unit 130 includes the indoor unit control means 230, and the hot-water supply unit 140 includes the hot-water supply unit control means 240, each of the units can independently exercises control. Each of the control means can transmit information using wireless or wired communication means.

The heat source unit control means 210 has the function of controlling a pressure state and a temperature state of the refrigerant in the heat source unit 110. The heat source unit control means 210 includes heat source unit capacity information output means 211, pressure sensor/temperature sensor information storage means 212, a processing circuit 213, and actuator control signal output means 214. Specifically, the heat source unit control means 210 has the function of storing information acquired by the pressure sensor and temperature sensor as data in the pressure sensor/temperature sensor information storage means 212, performing processing inside the heat source unit 110 by the processing circuit 213 on the basis of the stored information, and then outputting the operation frequency of the compressor 111, the fan rotation speed of the air-sending device 115, and the switching of the switching valve 112 from the actuator control signal output means 214.

The heat source unit capacity information output means 211 has the function of holding specified maximum value of the number of the indoor units 130 connectable to the branching unit 120, that of the number of the hot-water supply units 140 connectable to the branching unit 120, and that of the capacity of each of them in accordance with the capacity of the heat source unit 110 and of transmitting information on them to the branching unit 120.

The branching unit control unit 220 has the function of actuating the flow switching valve 124 in the branching unit 120 and controlling the opening degree of the expansion valve in a processing circuit 224 using information from the pressure sensor and the temperature sensor of the branching unit 120. The branching unit control unit 220 also has the function of limiting the connection capacity and the operation capacity of each of the indoor units 130 and the hot-water supply unit 140 in operation permission unit determining means 226 on the basis of information on the connection capacity and the operation capacity received from the heat source unit 110.

The indoor unit control means 230 has the function of controlling the degree of superheat at the time of cooling operation of the indoor unit 130 and the degree of subcooling at the time of heating operation of the indoor unit 130. Specifically, the indoor unit control means 230 has the function of changing the heat exchange area of the indoor-side heat exchanger 132, controlling the fan rotation speed of the indoor-side air-sending device 133, and controlling the opening degree of the indoor-side expansion device 131.

The hot-water supply unit control means 240 has the function of controlling the degree of superheat at the time of cold water operation of the hot-water supply unit 140 and the degree of subcooling at the time of hot-water supply operation of the hot-water supply unit 140. Specifically, the hot-water supply unit control means 240 has the function of changing the opening degree of the hot-water supply side expansion device 141 and controlling a three-way valve, a pump, or the like, which is not illustrated in Fig. 1, disposed in the water circuit 155 inside the hot-water supply unit 140 to adjust the flow.

Although not illustrated, the air-conditioning hot-water supply combined system 100 may preferably include a pressure sensor for sensing the discharge pressure of a refrigerant, a pressure sensor for sensing the suction pressure of the refrigerant, a temperature sensor for sensing the discharge temperature of the refrigerant, a temperature sensor for sensing the suction temperature of the air-conditioning refrigerant, a temperature sensor for sensing the temperature of the refrigerant entering or exiting from the heat exchanger 114, a temperature sensor for sensing the temperature of outside air taken into the heat source unit 110, a temperature sensor for sensing the temperature of the refrigerant entering or exiting from the indoor-side heat exchanger 132, a temperature sensor for sensing the temperature of water stored in the water storage tank (not illustrated), and other sensors. Information obtained from sensing by these various sensors (information on measurements, such as information on temperatures and information on pressures) is transmitted to the control means 200 and used in controlling the actuators.

Next, operations of the air-conditioning hot-water supply combined system 100 are described.

Operation modes executed by the air-conditioning hot-water supply combined system 100 include a cooling operation mode in which all of one or more running indoor units 130 perform cooling operation and the hot-water supply unit 140 performs cold water operation, a heating operation mode in which all of one or more running indoor units 130 perform heating operation and the hot-water supply unit 140 performs hot-water supply operation, a cooling main operation mode in which there coexist an indoor units 130 performing heating operation and another indoor unit 130 performing cooling operation, the hot-water supply unit 140 performs cold water operation or hot-water supply operation, and the cooling and cold water loads are larger, and a heating main operation mode in which there coexist an indoor unit 130 performing heating operation and another indoor unit 130 performing cooling operation, the hot-water supply unit 140 performs cold water operation or hot-water supply operation, and the heating and hot-water supply loads are the larger.

### [Cooling Operation Mode]

First, the refrigerant circuit and the details of the operation in cooling operation mode are described. In this mode, all of one or more running indoor units 130 perform cooling operation and the hot-water supply unit 140 performs cold water operation.

In the heat source unit 110, a low-pressure gas refrigerant is sucked into the compressor 111 and becomes a high-temperature and high-pressure gas refrigerant, and the gas refrigerant flows into the heat exchanger 114 through the switching valve 112. The high-pressure gas refrigerant flowing in the heat exchanger 114 is condensed and becomes a high-pressure liquid refrigerant by exchanging heat with air supplied to the heat exchanger 114, and the liquid refrigerant flows out of the heat exchanger 114. The high-pressure liquid refrigerant flowing out of the heat exchanger 114 flows into the high-pressure main pipe 151 through the check valve 113d, flows out of the heat source unit 110, and then flows into the branching unit 120.

In the branching unit 120, the high-pressure liquid refrigerant flowing from the high-pressure main pipe 151 flows into the liquid refrigerant pipe 153 through the gas-liquid separator 121 and the expansion device 122 and flows out of the branching unit 120. The refrigerant flowing out of the branching unit 120 flows into at least one indoor units 130 and the hot-water supply unit 140. In the indoor unit 130, the refrigerant becomes a low-pressure gas-liquid two-phase refrigerant or a low-pressure liquid refrigerant in the indoor-side expansion device 131, and the refrigerant flows into the indoor-side heat exchanger 132. The low-pressure two-phase refrigerant or low-pressure liquid refrigerant flowing in the indoor-side heat exchanger 132 evaporates in the indoor-side heat exchanger 132 and becomes a low-pressure gas refrigerant, and the gas refrigerant flows out of the indoor-side heat exchanger 132.

In the hot-water supply unit 140, the refrigerant becomes a low-pressure gas-liquid two-phase refrigerant or a low-pressure liquid refrigerant in the hot-water supply side expansion device 141, and the refrigerant flows into the refrigerant-to-water heat exchanger 142. The low-pressure two-phase refrigerant or the low-pressure liquid refrigerant flowing in the refrigerant-to-water heat exchanger 142 evaporates in the refrigerant-to-water heat exchanger 142, becomes a low-pressure gas refrigerant, and flows out of the refrigerant-to-water heat exchanger 142.

The low-pressure gas refrigerant flowing out of the indoor-side heat exchanger 132 and that of the refrigerant-to-water heat exchanger 142 flow through the gas refrigerant pipes 154, flow out of the indoor unit 130, and flow into the branching unit 120. The low-pressure gas refrigerants flowing in the branching unit 120 pass through the flow switching valves 124 (flow switching valve 124a, flow switching valve 124b, flow switching valve 124c) and are combined, and the refrigerant flows through the low-pressure main pipe 152. The low-pressure gas refrigerant flowing through the low-pressure main pipe 152 flows out of the branching unit 120 and then flows into the heat source unit 110. The low-pressure gas refrigerant flowing in the heat source unit 110 passes through the check valve 113a, the switching valve 112, and the accumulator 116 and is sucked into the compressor 111 again. The circuitry through which the refrigerant flows in this manner is the main circuitry at the time of cooling operation.

### [Heating Operation Mode]

Next, the refrigerant circuit and the details of the operation in heating operation mode are described. In this mode, all of one or more running indoor units 130 perform heating operation and the hot-water supply unit 140 performs hot-water supply operation.

In the heat source unit 110, a low-pressure gas refrigerant is sucked into the compressor 111 and becomes a high-temperature and high-pressure gas refrigerant, and the gas refrigerant flows into the high-pressure main pipe 151 through the switching valve 112 and the check valve 113c. The refrigerant flowing in the high-pressure main pipe 151 flows out of the heat source unit 110 and then flows into the branching unit 120. In the branching unit 120, the high-pressure gas refrigerant flowing through the high-pressure main pipe 151 passes through the gas-liquid separator 121 and the flow switching valves 124 (flow switching valve 124a, flow switching valve 124b, flow switching valve 124c) and flows into the gas refrigerant pipes 154. The refrigerants flowing in the gas refrigerant pipes 154 flow out of the branching unit 120 and then flow into at least one indoor unit 130 and the hot-water supply unit 140.

The high-pressure gas refrigerant flowing in the indoor unit 130 flows into the indoor-side heat exchanger 132, is condensed in the indoor-side heat exchanger 132, and becomes a high-pressure liquid refrigerant, and the liquid refrigerant flows out of the indoor-side heat exchanger 132. The high-pressure liquid refrigerant flowing out of the indoor-side heat exchanger 132 becomes a low-pressure gas-liquid two-phase refrigerant or a low-pressure liquid refrigerant in the indoor-side expansion device 131, and the refrigerant flows into the liquid refrigerant pipe 153. The refrigerant flows out of the indoor unit 130 and then flows into the branching unit 120.

The high-pressure gas refrigerant flowing in the hot-water supply unit 140 flows into the refrigerant-to-water heat exchanger 142, is condensed in the refrigerant-to-water heat exchanger 142, and becomes a high-pressure liquid refrigerant, and the liquid refrigerant flows out of the refrigerant-to-water heat exchanger 142. The high-pressure liquid refrigerant flowing out of the refrigerant-to-water heat exchanger 142 becomes a low-pressure gas-liquid two-phase refrigerant or a low-pressure liquid refrigerant in the hot-water supply side expansion device 141, and the refrigerant flows into the liquid refrigerant pipe 153. The refrigerant flows out of the hot-water supply unit 140 and then flows into the branching unit 120.

The low-pressure refrigerants flowing through the liquid refrigerant pipe 153 are combined in the branching unit 120, and the refrigerant flows into the low-pressure main pipe 152 through the expansion device 123. The low-pressure refrigerant flowing through the low-pressure main pipe 152 flows out of the branching unit 120 and then flows into the heat source unit 110. The refrigerant flowing in the heat source unit 110 passes through the check valve 113b, the heat exchanger 114, the switching valve 112, and the accumulator 116 and is sucked into the compressor 111 again. The circuitry through which the refrigerant flows in this manner is the main circuitry at the time of heating operation.

Next, the operations are described in which an evaporator (indoor unit in cooling operation) and a condenser (indoor unit in heating operation, hot-water supply unit) coexist in the load-side units. The operations in which the evaporator and condenser coexist include two kinds of operation modes: cooling main operation mode and heating main operation mode. The operation modes are switched such that the performance or efficiency is the highest by comparing the condensing temperature and the evaporating temperature of the refrigerant in the air-conditioning hot-water supply combined system 100 with target values set in the heat source unit. These operation modes are described below.

### [Cooling Main Operation Mode]

Next, the refrigerant circuit and the details of the operation in cooling main operation mode are described in which the indoor units 130 perform cooling and heating mixed operation, the hot-water supply unit 140 performs hot-water supply operation, and the cooling load is larger than the heating load. Here, the cooling main operation mode is described using an example in which the indoor units 130 perform cooling operation and the hot-water supply unit 140 performs hot-water supply operation.

In the heat source unit 110, a low-pressure gas refrigerant is sucked into the compressor 111 and becomes a high-temperature and high-pressure gas refrigerant, and the gas refrigerant flows into the heat exchanger 114 through the switching valve 112. The high-pressure gas refrigerant flowing in the heat exchanger 114 is condensed and becomes a high-pressure gas-liquid two-phase refrigerant by exchanging heat with air supplied to the heat exchanger 114, and the two-phase refrigerant flows out of the heat exchanger 114. The high-pressure two-phase refrigerant flowing out of the heat exchanger 114 flows into the high-pressure main pipe 151 through the check valve 113d, flows out of the heat source unit 110, and then flows into the branching unit 120.

In the branching unit 120, the high-pressure two-phase refrigerant flowing through the high-pressure main pipe 151 is separated into a high-pressure saturated gas and a high-pressure saturated liquid in the gas-liquid separator 121. The high-pressure saturated gas separated in the gas-liquid separator 121 passes through the flow switching valve 124c and flows into the gas branch pipe 154c. The high-pressure gas refrigerant flowing through the gas branch pipe 154c flows out of the branching unit 120 and then flows into the hot-water supply unit 140. The refrigerant flowing in the hot-water supply unit 140 is condensed in the refrigerant-to-water heat exchanger 142, becomes a high-pressure liquid refrigerant, and flows out of the refrigerant-to-water heat exchanger 142. The high-pressure liquid refrigerant flowing out of the refrigerant-to-water heat exchanger 142 becomes a medium-pressure gas-liquid two-phase refrigerant or a medium-pressure liquid refrigerant in the hot-water supply side expansion device 141. The refrigerant flows into the liquid refrigerant pipe 153, flows out of the hot-water supply unit 140, and then is reused as the refrigerant at the time of cooling.

The high-pressure saturated liquid separated in the gas-liquid separator 121 passes through the expansion device 122, is combined with the refrigerant flowing from the hot-water supply unit 140, flows into the liquid refrigerant pipe 153, and flows out of the branching unit 120. The refrigerant flowing out of the branching unit 120 flows into the indoor units 130. In each of the indoor units 130, the refrigerant becomes a low-pressure gas-liquid two-phase refrigerant or a low-pressure liquid refrigerant in the indoor-side expansion device 131, and the refrigerant flows into the indoor-side heat exchanger 132. The low-pressure two-phase refrigerant or low-pressure liquid refrigerant flowing in the indoor-side heat exchanger 132 evaporates in the indoor-side heat exchanger 132, becomes a low-pressure gas refrigerant, and flows out of the indoor-side heat exchanger 132.

The low-pressure gas refrigerant flowing out of the indoor-side heat exchanger 132 flows through the gas branch pipes154a and the gas branch pipe 154b, flows out of the indoor units 130, and then flows into the branching unit 120.

If the amount of the liquid refrigerant stored in the section of the liquid refrigerant pipe 153 increases, because the pressure in the liquid pipe rises and the difference from the pressure in the indoor unit in heating operation reduces, the amount of the refrigerant circulating in the indoor unit in heating operation reduces and the heating capacity decreases. To address this issue, the pressure in the liquid line is adjusted by appropriately opening the expansion device 123 to cause the liquid stored in the liquid line to escape and drawing the liquid stored in the liquid line into the low-pressure main pipe 152. Accordingly, the refrigerant flowing out of the branching unit 120 is a low-pressure two-phase refrigerant in which the low-pressure gas refrigerant flowing from the indoor units 130 and the liquid refrigerant flowing from the expansion device 123 are mixed with each other. The low-pressure two-phase refrigerants flowing in the branching unit 120 pass through the flow switching valves 124 (flow switching valve 124a, flow switching valve 124b) and are combined, and the refrigerant flows into the low-pressure main pipe 152. The low-pressure two-phase refrigerant flowing in the low-pressure main pipe 152 flows out of the branching unit 120 and then flows into the heat source unit 110. The low-pressure two-phase refrigerant flowing in the heat source unit 110 passes through the check valve 113a, the switching valve 112, and the accumulator 116 and is sucked into the compressor 111 again. The circuitry through which the refrigerant flows in this manner is the main circuitry at the time of cooling main operation.

### [Heating Main Operation Mode]

Next, the refrigerant circuit and the details of the operation in heating main operation mode are described in which the indoor units 130 perform cooling and heating mixed operation, the hot-water supply unit 140 performs hot-water supply operation, and the heating load is larger than the cooling load. Here, the cooling main operation mode is described using an example in which the indoor units 130 perform cooling operation and the hot-water supply unit 140 performs hot-water supply operation.

In the heat source unit 110, a low-pressure gas refrigerant is sucked into the compressor 111 and becomes a high-temperature and high-pressure gas refrigerant, and the gas refrigerant flows into the high-pressure main pipe 151 through the switching valve 112 and the check valve 113c. The refrigerant flowing in the high-pressure main pipe 151 flows out of the heat source unit 110 and then flows into the branching unit 120. In the branching unit 120, the high-pressure gas refrigerant flowing through the high-pressure main pipe 151 passes through the gas-liquid separator 121 and the flow switching valve 124c and flows into the gas refrigerant pipe 154c. The refrigerant flowing through the gas refrigerant pipe 154c flows out of the branching unit 120 and then flows into the hot-water supply unit 140.

The high-pressure gas refrigerant flowing in the hot-water supply unit 140 flows into the refrigerant-to-water heat exchanger 142. The gas refrigerant is condensed and becomes a high-pressure liquid refrigerant in the refrigerant-to-water heat exchanger 142, and it flows out of the refrigerant-to-water heat exchanger 142. The high-pressure liquid refrigerant flowing out of the refrigerant-to-water heat exchanger 142 becomes a medium-pressure gas-liquid two-phase refrigerant or a medium-pressure liquid refrigerant in the hot-water supply side expansion device 141. The refrigerant flows into the liquid branch pipe 153c, flows out of the hot-water supply unit 140, and then flows into the branching unit 120.

The medium-pressure refrigerant flowing in the branching unit 120 flows into the liquid branch pipe 153a and the liquid branch pipe 153b. This refrigerant flows out of the branching unit 120 and then flows into the indoor unit 130a and the indoor unit 130b. The refrigerant flowing in each of the indoor unit 130a and the indoor unit 130b becomes a low-pressure gas-liquid two-phase refrigerant or a low-pressure liquid refrigerant in the indoor-side expansion device 131, and the refrigerant flows into the indoor-side heat exchanger 132. The low-pressure liquid refrigerant flowing in the indoor-side heat exchanger 132 evaporates in the indoor-side heat exchanger 132, becomes a low-pressure gas refrigerant, and flows out of the indoor-side heat exchanger 132.

If the amount of the liquid refrigerant stored in the section of the liquid refrigerant pipe 153 increases, because the pressure in the liquid pipe rises and its difference from the pressure in the indoor unit in heating operation reduces, the amount of the refrigerant circulating in the indoor unit in heating operation reduces and the heating capacity decreases. To address this issue, the pressure in the liquid line is adjusted by appropriately opening the expansion device 123 to cause the liquid stored in the liquid line to escape and drawing the liquid stored in the liquid line into the low-pressure main pipe 152. Accordingly, the refrigerant flowing out of the branching unit 120 is a low-pressure two-phase refrigerant in which the low-pressure gas refrigerant flowing from the indoor units 130 and the liquid refrigerant flowing from the expansion device 123 are mixed with each other. The refrigerant flowing out of the indoor-side heat exchanger 132 flows into the gas refrigerant pipe 154. The low-pressure two-phase refrigerants flowing through the gas refrigerant pipe 154 flow out of the indoor unit 130a and the indoor unit 130b and then flow into the branching unit 120. The low-pressure two-phase refrigerants flowing into the branching unit 120 pass through the flow switching valves 124 (flow switching valve 124a, flow switching valve 124b) and flows into the low-pressure main pipe 152. The low-pressure two-phase refrigerant flowing in the low-pressure main pipe 152 flows out of the branching unit 120 and then flows into the heat source unit 110. The low-pressure gas refrigerant flowing in the heat source unit 110 passes through the check valve 113b, the heat exchanger 114, the switching valve 112, and the accumulator 116 and is sucked into the compressor 111 again. The circuitry through which the refrigerant flows in this manner is the main circuitry at the time of operation main operation.

### [Processing When "Operation Permission Request" Is Received from Indoor Unit 130]

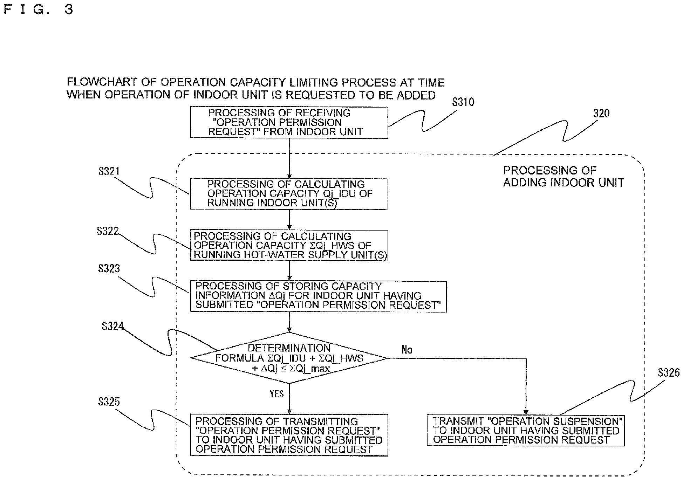

Fig. 3 is a flowchart that illustrates an operation capacity limiting process when an operation of an indoor unit 130 is requested to be added. The operation capacity limiting process performed by the air-conditioning hot-water supply combined system 100 when an operation of an indoor unit 130 is requested to be added is described with reference to Fig. 3. Processing 320 illustrated in Fig. 3 is performed in steps S321 to S326.

Upon receipt of an "operation permission request" from an indoor unit 130, the control means 200 starts the operation capacity limiting process (step S310). When receiving the "operation permission request" from the indoor unit 130, the control means 200 calculates the sum ∑Qj_IDU of the capacity values (e.g., capacity code Qj) of one or more running indoor units 130 (step S321). Next, the control means 200 calculates the sum ∑Qj_HWS, which is the sum of the values indicating the capacities of one or more hot-water supply units 140 (step S322). Then, the control means 200 stores the capacity ΔQj of the indoor unit 130 having output the "operation permission request" (step S323).

The control means 200 determines whether, if the capacity ΔQj of the indoor unit 130 having output the "operation permission request" is added to the sum ∑Qj_IDU and the sum ∑Qj_HWS, the total exceeds the maximum value ∑Qj_max of the operation capacity (step S324). This determination may preferably be made using the expression illustrated at step S324 in Fig. 3 (∑Qj_IDU + ∑Qj_HWS + ΔQj ≤ ∑Qj_max).

When determining that ∑Qj_IDU + ∑Qj_HWS + ΔQj ≤ ∑Qj_max establishes (YES at step S324), the control means 200 transmits an "operation permission" to the indoor unit 130 having output the "operation permission request" and enables the operation of that indoor unit 130 (step S325). In contrast, when determining that ∑Qj_IDU + ∑Qj_HWS + ΔQj > ∑Qj_max (NO at step S324), the control means 200 transmits an "operation suspension" to the indoor unit 130 having output the "operation permission request" and does not permit starting of the operation of that indoor unit 130 (step S326).

### [Processing When "Operation Permission Request" Is Received from Hot-Water Supply Unit 140]

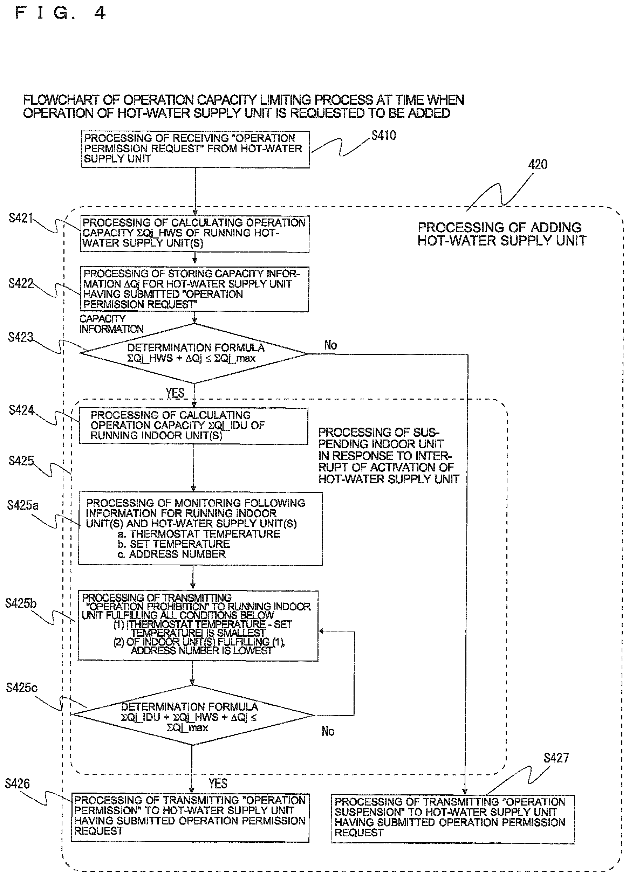

Fig. 4 is a flowchart that illustrates the operation capacity limiting process when an operation of a hot-water supply unit 140 is requested to be added. The operation capacity limiting process performed by the air-conditioning hot-water supply combined system 100 when an operation of a hot-water supply unit 140 is requested to be added is described with reference to Fig. 4. The flowchart in Fig. 4 illustrates the process occurring when, in a state where at least one indoor unit 130 and at least one hot-water supply unit 140 are running, a request to add the operation is submitted from another hot-water supply unit 140. Processing 420 illustrated in Fig. 4 is performed in steps S421 to S427. Processing 425 illustrated in Fig. 4 is performed in steps S425a to S425c.

Upon receipt of an "operation permission request" from a hot-water supply unit 140, the control means 200 starts the operation capacity limiting process (step S410). When receiving the "operation permission request" from the hot-water supply unit 140, the control means 200 calculates the sum ∑Qj_HWS of one or more running hot-water supply units 140 (including a thermostat ON/OFF state) (step S421). Next, the control means 200 stores the capacity ΔQj of the hot-water supply unit 140 having output the "operation permission request" (step S422).

The control means 200 determines whether, if the capacity ΔQj of the hot-water supply unit 140 having output the "operation permission request" is added to the sum ∑Qj_HWS, the total exceeds the maximum value ∑Qj_max of the operation capacity (step S423). This determination may preferably be made using the expression illustrated at step S423 in Fig. 4 (∑Qj_HWS + ΔQj ≤ ∑Qj_max).

When determining that ∑Qj_HWS + ΔQj ≤ ∑Qj_max establishes (YES at step S423), the control means 200 calculates the sum ∑Qj_IDU of the capacity values of one or more running indoor units 130 (including a thermostat ON/OFF state) (step S424). Then, the control means 200 monitors information on loads of the indoor units 130 and the hot-water supply units 140 (thermostat temperature (suction temperature), set temperature, address number for identifying each indoor unit 130) (step S425a). Then, the control means 200 transmits "operation prohibition" to the indoor unit 130 that fulfills all of predetermined conditions ((1) "thermostat temperature - set temperature" is the smallest; (2) of one or more indoor units 130 fulfilling the condition (1), the address number is the lowest) (step S425b).

That is, in a state where at least one indoor unit 130 is running, the temperature difference between the thermostat temperature (suction temperature) inside the indoor unit 130 and the set temperature can be regarded as a load, the size of the load required by the running indoor unit 130 can be managed, and the indoor unit 130 having a larger load can preferentially run within any set time period.

After that, the control means 200 determines whether, if the ∑Qj_IDU of the capacity values of one or more running indoor units 130 is added to the sum ∑Qj_HWS + ΔQj, the total exceeds the ∑Qj_max of the operation capacity (step S425c). This determination may preferably be made using the expression illustrated at step S425c in Fig. 4 (∑Qj_IDU + ∑Qj_HWS + ΔQj ≤ ∑Qj_max).

When determining that ∑Qj_IDU + ∑Qj_HWS + ΔQj ≤ ∑Qj_max establishes (YES at step S425c), the control means 200 transmits an "operation permission" to the hot-water supply unit 140 having output the "operation permission request" and enables the operation of that hot-water supply unit 140 (step S426). In contrast, when determining that ∑Qj_IDU + ∑Qj_HWS + ΔQj > ∑Qj_max (NO at step S425c), the control means 200 returns to the processing of step S425b and repeats that processing until it determines that ∑Qj_IDU + ∑Qj_HWS + ΔQj ≤ ∑Qj_max.

In step S423, when determining that ∑Qj_HWS + ΔQj > ∑Qj_max establishes (NO at step S423), the control means 200 transmits an "operation suspension" to the hot-water supply unit 140 having output the "operation permission request" and does not permit starting of the operation of that hot-water supply unit 140 (step S427).

### [Processing When Unit Suspends Operation]

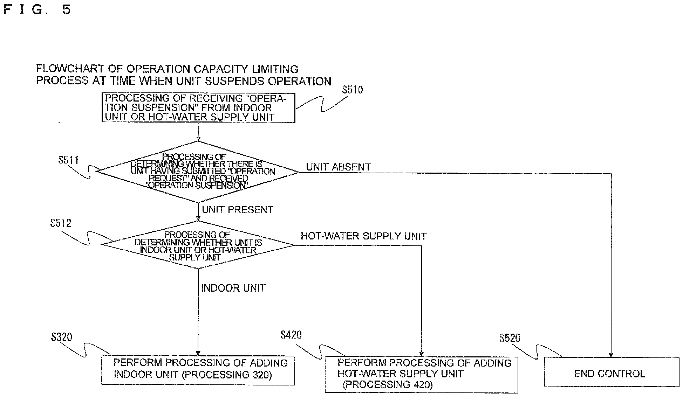

Fig. 5 is a flowchart that illustrates the operation capacity limiting process when a unit suspends its operation. The operation capacity limiting process performed by the air-conditioning hot-water supply combined system 100 when a unit suspends its operation is described with reference to Fig. 5. Examples of the unit described here include both the indoor unit 130 and the hot-water supply unit 140.

Upon receipt of an "operation suspension" from at least one of the indoor units 130 and the hot-water supply units 140, the control means 200 starts the operation capacity limiting process (step S510). When receiving the "operation suspension" from the at least one of the indoor units 130 and the hot-water supply units 140, the control means 200 stops the unit having output the "operation suspension" and determines whether there is a unit that has submitted the "operation permission request" but received the "operation suspension" in step S326 or step S427 (step S511).

When determining that there is a unit that has submitted the "operation permission request" but received the "operation suspension" (UNIT PRESENT at step S511), the control means 200 determines whether that unit is the indoor unit 130 or hot-water supply unit 140 (step S512). When determining that it is the indoor unit 130 (INDOOR UNIT at step S512), the control means 200 performs the processing 320 illustrated in Fig. 3. In contrast, when determining that it is the hot-water supply unit 140 (HOT-WATER SUPPLY UNIT at step S512), the control means 200 performs the processing 420 illustrated in Fig. 4.

When determining that there is no unit that submitted the "operation permission request" but received the "operation suspension" (UNIT ABSENT at step S511), the control means 200 ends the control process (step S520).

### [Case Where Performance of Hot-Water Supply Unit 140 Is Not Enough]

The control means 200 holds information on the water temperatures at the inlet and outlet of the hot-water supply unit 140 acquired from the temperature sensing element 143 (inlet water temperature sensor) and the temperature sensing element 144 (outlet water temperature sensor). The control means 200 compares the temperature difference between the inlet water temperature and the outlet water temperature with a rated water temperature. When the temperature difference between the inlet water temperature and the outlet water temperature is smaller than the rated water temperature, the control means 200 determines that the performance is not enough, that is, the performance of supplying a load is smaller with respect to the required load and performs the processing 425 illustrated in Fig. 4. This enables the processing of suspending a single indoor unit 130 with the smallest temperature difference between the thermostat temperature and the set temperature and allocating the performance to the hot-water supply unit 140.

With the above-described process, a control operation of prioritizing the hot-water supply unit 140 can be incorporated into the air-conditioning hot-water supply combined system 100, a specific indoor unit 130 can be prohibited from running, and a chiller main operation in winter can be executed. Thus, many indoor units 130 and hot-water supply units 140 can be connected to the heat source unit 110. Accordingly, the air-conditioning hot-water supply combined system can achieve connections and operations more than the capacity of connection and operation of the heat source unit 110, while at the same time air-conditioning and hot-water supply loads are fulfilled. The connections and operations more than the capacity of connection and operation of the heat source unit 110 enabled in the air-conditioning hot-water supply combined system 100 not only leads to a reduced capital investment but also contributes to installation space saving.

The processing 425 illustrated in Fig. 4 may preferably be performed regularly at any set time. With this, if there is a unit that submitted an "operation permission request" but receives an "operation suspension," the loads of the indoor units 130 and the hot-water supply unit 140 can be checked, the running indoor unit 130 and running hot-water supply unit 140 can be switched, and the indoor units 130 can run in rotation under the limitation of the maximum operation capacity ∑Qj_max. Accordingly, with the air-conditioning hot-water supply combined system 100, the indoor units 130 more than the operation capacity of the heat source unit 110 apparently over long periods of time can run in a season when loads are small, such as intermediate terms.

Here, refrigerants usable in the air-conditioning hot-water supply combined system 100 are described. Examples of the refrigerants usable in the refrigeration cycle in the air-conditioning hot-water supply combined system 100 can include a zeotropic refrigerant mixture, a near-azeotropic refrigerant mixture, and a simple refrigerant. Example of the zeotropic refrigerant mixture can include R407C (R32/R125/R134a) being a hydrofluorocarbon (HFC) refrigerant. This zeotropic refrigerant mixture is a mixture of refrigerants having different boiling points and thus has the characteristic in which the composition proportion of the liquid phase refrigerant and that of the gaseous phase are different. Example of the near-azeotropic refrigerant mixture can include R410A (R32/R125) and R404A (R125/R143a/R134a) being HCF refrigerants. This near-azeotropic refrigerant mixture has the characteristic similar to that of the zeotropic refrigerant mixture and also has the characteristic of having an operation pressure approximately 1.6 times that of R22.

Examples of the simple refrigerant can include R22 being a hydrochlorofluorocarbon (HCFC) refrigerant and R134a being a HFC refrigerant. This simple refrigerant is not a mixture and thus has the characteristic of being easy to handle. Other examples of the usable refrigerants can include carbon dioxide, propane, isobutene, and ammonia, which are natural refrigerants. R22 indicates chlorodifluoromethane, R32 indicates difluoromethane, R125 indicates pentafluoroethane, R134a indicates 1,1,1,2-tetrafluoroethane, and R143a indicates 1,1,1-trifluoroethane. Accordingly, the refrigerant may preferably be used in accordance with the usage or aim of the air-conditioning hot-water supply combined system 100.

As described above, the air-conditioning hot-water supply combined system 100 can achieve connections and operations more than the capacity of connection and operation of the heat source unit 110, while at the same time air-conditioning and hot-water supply loads are fulfilled. This can lead to a reduced capital investment and also can contribute to installation space saving.

### Reference Signs List

10 first connection pipe, 11 second connection pipe, 100 air-conditioning hot-water supply combined system, 110 heat source unit, 111 compressor, 112 switching valve, 113 check valve, 113a check valve, 113b check valve, 113c check valve, 113d check valve, 114 heat exchanger, 115 air-sending device, 116 accumulator, 120 branching unit, 121 gas-liquid separator, 122 expansion device, 123 expansion device, 124 flow switching valve, 124a flow switching valve, 124b flow switching valve, 124c flow switching valve, 130 indoor unit, 130a indoor unit, 130b indoor unit, 131 indoor-side expansion device, 131a indoor-side expansion device, 131b indoor-side expansion device, 132 indoor-side heat exchanger, 132a indoor-side heat exchanger, 132b indoor-side heat exchanger, 133 indoor-side air-sending device, 133a indoor-side air-sending device, 133b indoor-side air-sending device, 134 temperature sensing element, 134a temperature sensing element, 134b temperature sensing element, 140 hot-water supply unit, 141 hot-water supply side expansion device, 142 refrigerant-to-water heat exchanger, 143 temperature sensing element, 144 temperature sensing element, 151 high-pressure main pipe, 152 low-pressure main pipe, 153 liquid refrigerant pipe, 153a liquid branch pipe, 153b liquid branch pipe, 153c liquid branch pipe, 154 gas refrigerant pipe, 154a gas branch pipe, 154b gas branch pipe, 154c gas branch pipe, 155 water circuit, 200 control means, 210 heat source unit control means, 211 heat source unit capacity information output means, 212 pressure sensor/temperature sensor information storage means, 213 processing circuit, 214 actuator control signal output means, 220 branching unit control unit, 224 processing circuit, 226 operation permission unit determining means, 230 indoor unit control means, 240 hot-water supply unit control means.

## Claims

1. A air-conditioning hot-water supply combined system (100) comprises:
at least one heat source unit (110) including a compressor (111) and a heat exchanger (114);
at least one indoor unit (130) including an indoor-side heat exchanger (132) and an indoor-side expansion device (131);
at least one hot-water supply unit (140) including a refrigerant-to-water heat exchanger (142) and a hot-water supply side expansion device (141); and
a branching unit (120) that connects the indoor unit (130) and the hot-water supply unit (140) in parallel with each other to the heat source unit (110),
wherein the at least one hot-water supply unit (140) comprises a plurality of hot-water supply units (140),
**characterized by** further comprising a control means (200) configured to control the air-conditioning hot-water supply combined system (100) such, that
in a state where the at least one indoor unit (130) and at least one of the hot-water supply units (140) are running, when at least another one of the hot-water supply units (140) submits an operation permission request and it is determined that, if the hot-water supply unit (140) having submitted the operation permission request additionally runs, a capacity of the heat source unit (110) is exceeded,
at least one running indoor unit (130) fulfilling a predetermined condition is suspended until an allowable operation capacity of the heat source unit (110) becomes satisfied, and
a performance of the heat source unit (110) is allocated to the hot-water supply unit (140) having submitted the request.

2. The air-conditioning hot-water supply combined system (100) of claim 1, wherein, when a temperature difference between an inlet water temperature and an outlet water temperature in the refrigerant-to-water heat exchanger (142) is smaller than a predetermined value, it is determined that a performance of being able to supply a load is insufficient for a required load, and
at least one running indoor unit (130) fulfilling the predetermined condition is suspended_until the allowable operation capacity of the heat source unit (110) becomes satisfied, and
the performance of the heat source unit (110) is allocated to the hot-water supply unit (140) having submitted the request.

3. The air-conditioning hot-water supply combined system (100) of claim 1 or 2, wherein, the at least one indoor unit (130) comprises a plurality of indoor units (130), and
the at least one running indoor unit (130) fulfilling the predetermined condition has the lowest address number among the running indoor units (130) each of which has the smallest temperature difference between suction temperature and set temperature.

4. The air-conditioning hot-water supply combined system (100) of any one of claims 1 to 3, wherein, when at least one of the running indoor unit (130) and the running hot-water supply unit (140) suspends, an operation permission is provided to the hot-water supply unit (140) having submitted the operation permission request but remaining inactive.

5. The air-conditioning hot-water supply combined system (100) of claim 4, wherein, when the inactive indoor unit (130) submits an operation permission request and if the indoor unit (130) having submitted the operation permission request additionally runs, the capacity of the heat source unit (110) is exceeded,
the indoor unit (130) having submitted the operation permission request is suspended until the allowable operation capacity of the heat source unit (110) becomes satisfied.

6. The air-conditioning hot-water supply combined system (100) of any one of claims 1 to 5, wherein a temperature difference between a thermostat temperature and a set temperature in the running indoor unit (130) is regarded as a load, and the indoor unit (130) with a larger required load than other required loads within any set time period preferentially runs.

7. The air-conditioning hot-water supply combined system (100) of any one of claims 1 to 6, further comprising a refrigerant circuit for providing hot water, the refrigerant circuit being connected between the heat source unit (110) and the hot-water supply unit (140), wherein the air-conditioning hot-water supply combined system (100) thus has a cascade cycle configuration.

## Patentansprüche

1. Kombiniertes-Klimatisierungs-Warmwasser-Versorgungsystem (100), umfassend: zumindest eine Wärmequelleneinheit (110), aufweisend einen Verdichter (111) und einen Wärmetauscher (114);
zumindest eine Inneneinheit (130), aufweisend einen Innenwärmetauscher (132) und eine innenseitige Expansionseinrichtung (131);
zumindest eine Warmwasserversorgungseinheit (140), aufweisend einen Kältemittel-zu-Wasser-Wärmetauscher (142) und eine warmwasserversorgungsseitige Expansionseinrichtung (141); und eine Abzweigungseinheit (120), die die Inneneinheit (130) und die Warmwasserversorgungseinheit (140) parallel zueinander mit der Wärmequelleneinheit (110) verbindet,
wobei die zumindest eine Warmwasserversorgungseinheit (140) eine Vielzahl von Warmwasserversorgungseinheiten (140) umfasst,
**dadurch gekennzeichnet, dass** sie ferner ein Steuermittel (200) umfasst, das eingerichtet ist, das Kombinierte-Klimatisierungs-Warmwasser-Versorgungssystem (100) zu steuern, so dass
in einem Zustand, in dem die zumindest eine Inneneinheit (130) und zumindest eine der Warmwasserversorgungseinheiten (140) laufen, wenn zumindest eine weitere der Warmwasserversorgungseinheiten (140) eine Betriebszulassungsanforderung übermittelt und bestimmt wird, falls die Warmwasserversorgungseinheit (140), die die Betriebszulassungsanforderung übermittelt hat, zusätzlich läuft, dass eine Kapazität der Wärmequelleneinheit (110) überschritten wird, zumindest eine laufende Inneneinheit (130), die eine vorherbestimmte Bedingung erfüllt, unterbrochen wird, bis eine zulässige Betriebskapazität der Wärmequelleneinheit (110) erfüllt wird, und
eine Leistung der Wärmequelleneinheit (110) der Warmwasserversorgungseinheit (140) zugeordnet wird, die die Anforderung übermittelt hat.

2. Kombiniertes-Klimatisierungs-Warmwasser-Versorgungssystem (100) nach Anspruch 1, wobei, wenn eine Temperaturdifferenz zwischen einer Einlasswassertemperatur und einer Auslasswassertemperatur im Kältemittel-zu-Wasser-Wärmetauscher (142) geringer ist als ein vorherbestimmter Wert, bestimmt wird, dass eine Leistung, um eine Last bereitstellen zu können, für eine erforderliche Last unzureichend ist, und
zumindest eine laufende Inneneinheit (130), die die vorherbestimmte Bedingung erfüllt, unterbrochen wird, bis eine zulässige Betriebskapazität der Wärmequelleneinheit (110) erfüllt wird, und
eine Leistung der Wärmequelleneinheit (110) der Warmwasserversorgungseinheit (140), die die Anforderung übermittelt hat, zugeordnet wird.

3. Kombiniertes-Klimatisierungs-Warmwasser-Versorgungssystem (100) nach Anspruch 1 oder 2, wobei die zumindest eine Inneneinheit (130) eine Vielzahl von Inneneinheiten (130) umfasst, und
die zumindest eine laufende Inneneinheit (130), die die vorherbestimmte Bedingung erfüllt, die niedrigste Adressennummer unter den laufenden Inneneinheiten (130) aufweist, von denen jede die kleinste Temperaturdifferenz zwischen Ansaugtemperatur und eingestellter Temperatur aufweist.

4. Kombiniertes-Klimatisierungs-Warmwasser-Versorgungssystem (100) nach einem der Ansprüche 1 bis 3, wobei, wenn zumindest eine von den laufenden Inneneinheiten (130) und der laufenden Warmwasserversorgungseinheit (140) aussetzt, an die Warmwasserversorgungseinheit (140), die die Betriebszulassungsanforderung übermittelt hat aber inaktiv bleibt, eine Betriebszulassung übermittelt wird.

5. Kombiniertes-Klimatisierungs-Warmwasser-Versorgungssystem (100) nach Anspruch 4, wobei, wenn die inaktive Inneneinheit (130) eine Betriebszulassungsanforderung übermittelt und falls die Inneneinheit (130), die die Betriebszulassungsanforderung übermittelt hat, zusätzlich läuft, die Kapazität der Wärmequelleneinheit (110) überschritten wird,
die Inneneinheit (130), die die Betriebszulassungsanforderung übermittelt hat, unterbrochen wird, bis die zulässige Betriebskapazität der Wärmequelleneinheit (110) erfüllt wird.

6. Kombiniertes-Klimatisierungs-Warmwasser-Versorgungssystem (100) nach einem der Ansprüche 1 bis 5, wobei eine Temperaturdifferenz zwischen einer Thermostattemperatur und einer eingestellten Temperatur in der laufenden Inneneinheit (130) als eine Last betrachtet wird, und die Inneneinheit (130) mit einer größeren erforderlichen Last als andere erforderliche Lasten innerhalb irgendeines eingestellten Zeitraums vorzugsweise läuft.

7. Kombiniertes-Klimatisierungs-Warmwasser-Versorgungssystem (100) nach einem der Ansprüche 1 bis 6, ferner umfassend einen Kältemittelkreislauf zur Bereitstellung von Warmwasser, wobei der Kältemittelkreislauf zwischen der Wärmequelleneinheit (110) und der Warmwasserversorgungseinheit (140) verbunden ist, wobei das Kombinierte-Klimatisierungs-Warmwasser-Versorgungssystem (100) somit eine Kaskadenkreislaufkonfiguration aufweist.

## Revendications

1. Système combiné de climatisation / alimentation en eau chaude (100) comprenant :
au moins une unité de source de chaleur (110) incluant un compresseur (111) et un échangeur de chaleur (114) ;
au moins une unité intérieure (130) incluant un échangeur de chaleur de côté intérieur (132) et un détendeur de côté intérieur (131) ;
au moins une unité d'alimentation en eau chaude (140) incluant un échangeur de chaleur de type « fluide frigorigène vers eau » (142) et un détendeur de côté d'alimentation en eau chaude (141) ; et
une unité de dérivation (120) qui relie l'unité intérieure (130) et l'unité d'alimentation en eau chaude (140), en parallèle l'une avec l'autre, à l'unité de source de chaleur (110) ;
dans lequel ladite au moins une unité d'alimentation en eau chaude (140) comprend une pluralité d'unités d'alimentation en eau chaude (140) ;
**caractérisé en ce qu'**il comprend en outre un moyen de commande (200) configuré de manière à commander le système combiné de climatisation / alimentation en eau chaude (100) de sorte que,
dans un état où ladite au moins une unité intérieure (130) et au moins l'une des unités d'alimentation en eau chaude (140) fonctionnent toutes les deux, lorsqu'au moins une autre des unités d'alimentation en eau chaude (140) présente une demande de permission de fonctionnement, et où il est déterminé que, si l'unité d'alimentation en eau chaude (140) ayant présenté ladite demande de permission de fonctionnement fonctionne en outre, une capacité de l'unité de source de chaleur (110) est dépassée ;
au moins une unité intérieure en fonctionnement (130) satisfaisant une condition prédéterminée est interrompue jusqu'à ce qu'une capacité de fonctionnement admissible de l'unité de source de chaleur (110) soit satisfaite ; et
un rendement de l'unité de source de chaleur (110) est alloué à l'unité d'alimentation en eau chaude (140) ayant présenté la demande.

2. Système combiné de climatisation / alimentation en eau chaude (100) selon la revendication 1, dans lequel, lorsqu'une différence de température entre une température d'eau d'entrée et une température d'eau de sortie dans l'échangeur de chaleur de type « fluide frigorigène vers eau » (142) est inférieure à une valeur prédéterminée, il est déterminé qu'un rendement en termes d'aptitude à alimenter une charge est insuffisant pour une charge requise ; et
au moins une unité intérieure en fonctionnement (130) satisfaisant la condition prédéterminée est interrompue jusqu'à ce que la capacité de fonctionnement admissible de l'unité de source de chaleur (110) soit satisfaite ; et
le rendement de l'unité de source de chaleur (110) est alloué à l'unité d'alimentation en eau chaude (140) ayant présenté la demande.

3. Système combiné de climatisation / alimentation en eau chaude (100) selon la revendication 1 ou 2, dans lequel ladite au moins une unité intérieure (130) comprend une pluralité d'unités intérieures (130) ; et
ladite au moins une unité intérieure en fonctionnement (130) satisfaisant la condition prédéterminée présente le numéro d'adresse le plus faible parmi les unités intérieures en fonctionnement (130) dont chacune présente la plus petite différence de température entre la température d'aspiration et la température de consigne.

4. Système combiné de climatisation / alimentation en eau chaude (100) selon l'une quelconque des revendications 1 à 3, dans lequel, lorsqu'au moins l'une parmi l'unité intérieure en fonctionnement (130) et l'unité d'alimentation en eau chaude en fonctionnement (140) est interrompue, une permission de fonctionnement est accordée à l'unité d'alimentation en eau chaude (140) ayant présenté la demande de permission de fonctionnement, mais restant inactive.

5. Système combiné de climatisation / alimentation en eau chaude (100) selon la revendication 4, dans lequel, lorsque l'unité intérieure inactive (130) présente une demande de permission de fonctionnement, et si l'unité intérieure (130) ayant présenté la demande de permission de fonctionnement fonctionne en outre, la capacité de l'unité de source de chaleur (110) est dépassée ;
l'unité intérieure (130) ayant présenté la demande de permission de fonctionnement est interrompue jusqu'à ce que la capacité de fonctionnement admissible de l'unité de source de chaleur (110) soit satisfaite.

6. Système combiné de climatisation / alimentation en eau chaude (100) selon l'une quelconque des revendications 1 à 5, dans lequel une différence de température entre une température de thermostat et une température de consigne dans l'unité intérieure en fonctionnement (130) est considérée comme une charge, et l'unité intérieure (130) présentant une charge requise plus élevée que d'autres charges requises, au cours d'une quelconque période de temps définie, fonctionne de préférence.

7. Système combiné de climatisation / alimentation en eau chaude (100) selon l'une quelconque des revendications 1 à 6, comprenant en outre un circuit frigorifique destiné à fournir de l'eau chaude, le circuit frigorifique étant raccordé entre l'unité de source de chaleur (110) et l'unité d'alimentation en eau chaude (140), dans lequel le système combiné de climatisation / alimentation en eau chaude (100) présente par conséquent une configuration de cycle en cascade.
